Europäisches Patentamt

(19) European Patent Office

Office européen des brevets

(11) Publication number : **0 430 906 B1**

(12) **EUROPEAN PATENT SPECIFICATION**

(45) Date of publication of patent specification :
29.06.94 Bulletin 94/26

(51) Int. Cl.⁵ : **C09J 167/06, C09D 5/34**

(21) Application number : **90830526.1**

(22) Date of filing : **14.11.90**

(54) **Polyester resin based composition having the dual function of adhesive and putty, for use on a variety of materials.**

(30) Priority : **14.11.89 IT 4855689**

(43) Date of publication of application :
**05.06.91 Bulletin 91/23**

(45) Publication of the grant of the patent :
**29.06.94 Bulletin 94/26**

(84) Designated Contracting States :
**AT BE CH DE ES FR GB LI NL SE**

(56) References cited :
**EP-A- 0 044 286**
**GB-A- 1 150 793**
**US-A- 4 136 134**

(56) References cited :
**H.F. MARK et al.: "Encyclopedia of polymer science and engineering", vol. 12, edition 2, 1988, page 256; J. SELLEY: "Polyesters unsaturated"**

(73) Proprietor : **Bandini, Silvio**
**263 Via di Tor Cervara**
**I-00155 Roma RM (IT)**

(72) Inventor : **Bandini, Silvio**
**263 Via di Tor Cervara**
**I-00155 Roma RM (IT)**

(74) Representative : **Bazzichelli, Alfredo et al**
**c/o Società Italiana Brevetti S.p.A.**
**Piazza di Pietra, 39**
**I-00186 Roma (IT)**

EP 0 430 906 B1

## Description

The present invention relates to a polyester resin based composition having the dual function of adhesive and putty, for use on a variety of materials.

The present state of the art of restoration, cementing and reconstruction of missing parts is characterized by a great number of products, each having a field of use restricted to a specific class of materials and, furthermore, to a specific destination either as an adhesive or for structural reconstruction.

Said products differ from each other in their physical and chemical properties, according to the nature of the materials on which they are to be used. Among them can be mentioned for example: cyano-acrylic adhesives for glass and metals, neoprene adhesives for leather and cloth, polyurethanic and vinylic adhesives for wood, polyamidic and epoxy adhesives for metals and other materials having low deformability. Furthermore, among the putties it is possible to mention polyester putties for metals, wood and marble, polyurethanic and glycerophthalic putties for metals, wood and glass. The preceding list is to be considered merely as an example, although it does give an idea of the vast range of products and their differentiation in relation to their final use.

It is therefore an object of the present invention to provide a single product having the ability to act both as an adhesive and as a putty on materials of varying nature, thus overcoming the specificity of use of the products belonging to the state of the art.

It has now been surprisingly found that a composition formed from "technical" polyester resins preaccelerated using tertiary amines (for example dimethylaniline) as promoters of the polymerization process, steatite and hydrogenated castor oil to which is added, at the moment of use, a quantity of organic peroxide as polymerisation initiator, equivalent to 1-3% with reference to the weight of the composition used, shows a dual function as an adhesive and as a putty and can act on a variety of materials with the dual function of adhesive and putty.

Subject of the present invention is therefore a composition having the dual function of adhesive and putty, comprising:
- 35-45% by weight of "technical" polyester resin of a tetrahydrophthalic type,
- 35-45% by weight of "technical" polyester resin of a dicyclopentadienic type,
- 4-6% by weight of hydrogenated castor oil,
- 14,7-14,9% by weight of powdered steatite and
- 0,1-0,3% by weight of cobalt octoate at 12%, to which is added before use an amount of:
- 1-3% by weight of benzoyl peroxide.

Polyester resins are products obtained by polycondensation (esterification) of glycols with saturated or unsaturated bibasic acids, preferably the long chain ones. Said resins are used in the field of composite materials, paints, technofibers, in the nautical field, etc. The term "technical" polyester resins, used according to the present invention, indicates polyester resins produced by esterification, to which have been added vinylic monomers (mainly styrene) which polymerize easily through the effect of the free radicals generated by the organic peroxides. Said organic peroxides are added at the moment of use and the production of free radicals initiates the polymerisation. In this way reaction products are obtained which are hard and have valuable physical and mechanical properties. In the case of (technical) polyester resins according to the present invention, since the polymerisation process is performed at room temperature, there is added advantageously along with benzoyl peroxide also cobalt octoate to the composition both with the aim of adding a reaction accelerator and with the aim of providing a rapid surface hardening at the moment of use, thanks to the siccative action of the same cobalt octoate.

The market of polyester resins has at its disposal today a vast range of resins obtained through the use, as starting components for the production of the resins, of a number of saturated and insaturated acids, among which can be mentioned, for example, maleic acid, in the form of maleic anhydride, fumaric acid, or itaconic and citaconic acids; among the saturated bibasic acids can be mentioned the ortho- and metha-phthalic acids generally introduced in the form of their anhydrides, or adipic acid, azelaic acid, sebacic acid and, in order to improve the qualities of hardening to air, tetrahydrophthalic acid. Insofar as the glycols are concerned it is possible to mention propylene glycols, and, of great importance, diethylene and triethylene glycols.

Starting materials for the production of polyester resins (by polycondensation) which have shown greatest interest for the application needs of the subject of the present invention are those leading to resins of glycodiethylenic, orthocyclopentadienic, tetrahydrophthalic and dicyclopentadienic type.

Steatite is a rock, also known as soapstone, that represents an impure and compact variety of talc, the chemical composition of which is represented by the formula $Mg_3[(OH)_2Si_4O_{10}]$. Steatite is usually employed as a dry lubricant, as the single layers of the steatite itself are held together by much weaker bonds than those binding the ions belonging to any one layer; this structure allows a sliding of the layers and thus explains its

2

use as a lubricant. The strength of the bonds between the ions belonging to any one layer, on the contrary, determines the great stability of said layer against chemical agents and heat.

In the composition according to the present invention steatite has the dual function of representing flat islands of inert, non-reactive material within the polymerized matrix of the polyester resins, and of avoiding the build-up of excessively rigid three-dimensional structures deriving from bonds between adjacent planes, the formation of which is prevented by the presence of the steatite itself. A further function of steatite is that of absorbing any eventual impurities that may be found on the surfaces to be bonded, thus permitting a more uniform distribution and greater adherence of the mix to the surfaces themselves, which furthermore provides the high strength of the cementing or reconstruction. The granulometry of the steatite used is indicated in the following table:

| Particle diameter (micron) | Percentage distribution |
|---|---|
| 60 | 1,8 % |
| 40 | 5,8 % |
| 20 | 40,4 % |
| 15 | 52 % |

The hydrogenated castor oil used in the composition according to the present invention is an agent which makes the whole composition thixotropic. Its melting point, at 53°C, allows the formation of a stable network of colloidal particles. Furthermore its structure is sufficiently stable to guarantee, at low stresses, a sufficient viscosity, workability and sedimentation. Along with its function as a thixotropic agent to prevent the resin from running off, when applied to vertical surfaces, the hydrogenated castor oil also has the function of improving penetration into the pores of the surface to be bonded thanks to its characteristics of liposolubility and hydrophobic nature. A further function of the hydrogenated castor oil, is that of creeping agent, together with the steatite. In fact the oil molecules, which are interposed, during the polimerization reaction of the polyester, at a molecular level between the molecules of the polyester itself, allow the latter to creep and, along with the steatite as mentioned above, give the reaction mass mechanical characteristics such as to prevent the build-up of stresses deforming the supports, following thermal expansion or mechanical deformation.

The presence of the hydrogenated castor oil also gives the mix a thixotropic character with a thixotropic value in the finished product comprised between 3,89 and 4,75 using the Brookfield method and apparatus. The degree of thixotrophy within the above indicated interval is such as to permit, even after the addition of a catalyst and the mechanical action imposed during mixing, applications of notable volume without undergoing any deformation right up to complete hardening.

In the following an example of composition is given to which, before use, a quantity of benzoyl peroxide must be added, corresponding to 2% by weight of the entire composition.

Composition:

- 40 parts by weight of "technical" polyester resin of a tetrahydrophthalic type,
- 40 parts by weight of "technical" polyester resin of a dicyclopentadienic type,
- 5 parts by weight of hydrogenated castor oil,
- 14,8 parts by weight of powdered steatite,
- 0,2 parts by weight of cobalt octoate at 12% (with reference to the weight of metal).

The components are poured in the above order into a hermetically sealed mechanical mixer, which is given a speed increasing to 500 revolutions per minute for 20 minutes, and in any case until reaching 53°C in order to obtain the melting of the hydrogenated castor oil. The mix is then made to undergo, during a final slow mixing, the action of a vacuum or negative pressure to extract the incorporated air and the gas generated during the mixing. The product thus obtained, which has a shelf life of 24 months at room temperature, is additioned before use as indicated above with benzoyl peroxide. Pot life is of about 30 minutes.

The product shows the following characteristics:

Physico-chemical characteristics

- Viscosity at 25°C (Brookfield HBT)
  - speed 5 rpm          232.000 cps
  - speed 0,5 rpm         4.000.000 cps
- Flash point          +32,2°C
- Thixotropy index        3,89-4,75
- Specific weight at 20°C (ASTM D 792)        1,17 g/cm$^3$
- Gelling time
  - temperature 0°C        1 h
  - temperature 15°C        25 min
  - temperature 30°C        8 min

Mechanical characteristics

- BARCOL hardness (after 24 h)        5-10
- Tensile strength (ASTM D638)        250 kg/cm
- Tensile modulus (ASTM D638)        16.700 kg/cm
- Stretch elongation (ASTM D638)        2,54%
- Flexure resistance (ASTM D790)        600 kg/cm
- Elastic flexure modulus (ASTM D790)        14.500 kg/cm$^2$

## Claims

1. A composition having the dual function of adhesive and putty comprising:
   - 35-45% by weight of "technical" polyester resin of a tetrahydrophthalic type,
   - 35-45% by weight of "technical" polyester resin of a dicyclopentadienic type,
   - 4-6% by weight of hydrogenated castor oil,
   - 14,7-14,9% by weight of powdered steatite, and
   - 0,1-0,3% by weight of cobalt octoate at 12%, to which is added before use an amount of:
   - 1-3% by weight with reference to the weight of the composition of benzoyl peroxide.

2. The composition according to claim 1 characterized in that said powdered steatite shows the following granulometry:

| Particle diameter (micron) | Percentage distribution |
|---|---|
| 60 | 1,8 % |
| 40 | 5,8 % |
| 20 | 40,4 % |
| 15 | 52 % |

3. A process for the preparation of the composition according to claim 1 and 2 comprising the following steps:
   a) introduction of the tetrahydrophthalic resins, the dicyclopentadienic resins, the hydrogenated castor oil, the powdered steatite and the cobalt octoate into a hermetically sealed mixer;
   b) mixing with a speed increasing up to 500 rpm and until reaching a temperature of 53°C; and
   c) final slow mixing and outgasing of the mix formed.

## Patentansprüche

1. Zusammensetzung mit zweifacher Funktion als Klebstoff und Kitt, dadurch gekennzeichnet, daß sie
   - 35-45 Gewichts % eines "technischen" Polyesterharzes der tetrahydrophtalischen Art,

- 35-45 Gewichts % eines "technischen" Polyesterharzes der dicyclopentadienischen Art,
- 4-6 Gewichts % von hydriertem Rizinusöl,
- 14,7 - 14,9 Gewichts % von pulverisiertem Steatit, und
- 0,1-0,3 Gewichts % von 12 %igem Kobaltoctoat, der Zusammensetzung vor der Benutzung ein Anteil von Benzoylperoxyd in der Menge von 1-3 Gewichts%, mit Bezug auf das Gewicht der Zusammensetzung, hinzugefügt wird, enthält.

2. Zusammensetzung nach Anspruch 1, dadurch gekennzeichnet, daß das Steatit die folgende Korngröße aufweist:

| Teilchendurchmesser (micron) | Prozentverteilung |
|---|---|
| 60 | 1,8 % |
| 40 | 5,8 % |
| 20 | 40,4 % |
| 15 | 52 % |

3. Verfahren zur Herstellung der Zusammensetuzung gemäß den Ansprüchen 1 und 2, dadurch gekennzeichnet, daß man

a) die Tetrahydrophtalharze, die Dicyclopentadienharze, das hydrierte Rizinusöl, das pulverisierte Steatit und das Kobaltoctoat in einen hermetisch geschlossenen Mischapprat einführt;

b) bei einer bis auf 500 rpm zunehmenden Geschwindigkeit und bis eine Temperatur von 53°C erreicht wird, rührt; und

c) eine anschließende langsame Mischung durchführt und die erhaltene Mischung entgast.

**Revendications**

1. Composition ayant la double fonction d'un adhésif et d'un stuc comprenant:
   - 35-45% en poids d'une résine pour polyester "technique" d'un genre tetrahydrophtalique,
   - 35-45% en poids de résine polyester "technique" d'un genre dicyclopentadienique,
   - 4-6% en poids d'huile de ricin hydrogéné,
   - 14,7-14,9% en poids de stéatite en poudre, et
   - 0,1-0,3% en poids d'octoate de cobalt à 12%, auquel l'on ajoute avant l'utilisation une quantité de:
   - 1-3% en poids de peroxyde de benzoyle, en référence au poids de la composition.

2. Composition selon la revendication 1. caractérisée en ce que la dite stéatite en poudre montre la granulométrie suivante:

| Diamètre de particule (micron) | Distribution en pourcentage |
|---|---|
| 60 | 1,8 % |
| 40 | 5,8 % |
| 20 | 40,4 % |
| 15 | 52 % |

3. Procédé pour la préparation d'une composition selon le revendications 1. et 2. comprenant les operations suivantes:

a) introduction des résines tetrahydrophtaliques, des résines dicyclopentadieniques, de l'huile de ricin hydrogéné, de la stéatite en poudre et de l'octoate de cobalt dans un mélangeur hermétiquement scellé;

b) mélanger à une vitesse augmentant jusqu'à 500 tours par minute et jusqu'à atteindre une température de 53°C; et

c) mélanger doucement à la fin et dégazer le mélange qui s'est formé.